# EUROPÄISCHE PATENTANMELDUNG

(11) **EP 3 053 481 A1**
(43) Veröffentlichungstag der Anmeldung: **10.08.2016**
(21) Anmeldenummer: 16153261.9
(22) Anmeldetag: 29.01.2016
(51) Int. Cl.: A47B 13/00, F16B 12/42, F16B 12/50, A47B 13/02, F16B 9/02

(54) **VORRICHTUNG UND VERFAHREN ZUM BEFESTIGEN VON MÖBELTEILEN**

(30) Priorität: 06.02.2015 DE 102015101725
(71) Anmelder: Ebbinghaus, Heinrich, 33415 Verl (DE)
(72) Erfinder: Ebbinghaus, Heinrich, 33415 Verl (DE)
(74) Vertreter: Ostermann, Thomas

(57) **Zusammenfassung**

Vorrichtung und Verfahren zum Befestigen von Möbelteilen, wobei ein erstes Möbelteil als ein langgestrecktes Hohlprofil (2) und ein zweites Möbelteil einen flächigen Abschnitt aufweist, an dem ein Endbereich (15) des langgestreckten Hohlprofils (27,2) über Befestigungsmittel lösbar befestigbar ist, dass das Befestigungsmittel ein in dem Hohlprofil (2) erstreckendes Abschlusselement (5)
- ein Verbindungselement zum Verbinden des Abschlusselementes (5) mit dem flächigen Abschnitt des zweiten Möbelteils,
- eine Anzahl von Halteelementen (6) zum Halten des Abschlusselementes (5) an dem Hohlprofil (2) aufweist, wobei das Abschlusselement (5) und das Halteelement fest miteinander verbunden sind zur Bildung eines Befestigungsorgans (4) und dass die Halteelemente (26,6) über Schraubverbindungsmittel mit einer Wandung (16) des Hohlprofils (27,2) verbindbar sind.

## Beschreibung

Die Erfindung betrifft eine Vorrichtung zum Befestigen von Möbelteilen, wobei ein erstes Möbelteil als ein langgestrecktes Hohlprofil und ein zweites Möbelteil einen flächigen Abschnitt aufweist, an dem ein Endbereich des langgestreckten Hohlprofils über Befestigungsmittel lösbar befestigbar ist, dass das Befestigungsmittel ein in dem Hohlprofil erstreckendes Abschlusselement
- ein Verbindungselement zum Verbinden des Abschlusselementes mit dem flächigen Abschnitt des zweiten Möbelteils,
- eine Anzahl von Halteelementen zum Halten des Abschlusselementes an dem Hohlprofil aufweist.

Ferner betrifft die Erfindung ein Verfahren zum Befestigen eines ersten Möbelteils an einem zweiten Möbelteil, wobei das erste Möbelteil als ein Hohlprofil ausgebildet ist.

Aus der DE 10 2005 045 455 A1 ist eine Vorrichtung zum Befestigen von Möbelteilen bekannt, bei dem ein als Hohlprofil ausgebildetes erstes Möbelteil an einem zweiten Möbelteil über Befestigungsmittel befestigt wird. Zum einen umfassen die Befestigungsmittel ein plattenförmiges Abschlusselement, das am Ende des Hohlprofils innerhalb desselben positioniert wird. Zur Positionierung des Abschlusselementes sind als Befestigungsmittel weiterhin strebenförmige Halteelemente vorgesehen, die über eine radiale Gewindebohrung des Abschlusselementes radial verstellbar sind und das Abschlusselement innerhalb des Hohlprofils lagesicher verspannen. Das Abschlusselement weist eine axiale Bohrung mit einem Innengewinde auf, so dass über ein stiftförmiges Verbindungselement eine Befestigung des Hohlprofils an dem zweiten Möbelteil gewährleistet ist. Nachteilig an der bekannten Befestigungsvorrichtung ist, dass mehrere Halteelemente erforderlich sind, um das Abschlusselement in dem Hohlprofil zu befestigen. Darüber hinaus müssen die Halteelemente gleichmäßig verspannt werden, damit die axiale Bohrung des Abschlusselementes zentriert angeordnet ist. Der Aufwand für eine versteckte Anordnung von Befestigungsmitteln für die Verbindung zwischen zwei Möbelteilen ist relativ groß.

Aufgabe der vorliegenden Erfindung ist es daher, eine Vorrichtung und Verfahren zum Befestigen von Möbelteilen derart anzugeben, dass bei vereinfachter Handhabung ein fester und exakter Halt zwischen den Möbelteilen gewährleistet ist, wobei von äußeren Flächen der Möbelteile keine Befestigungsmittel abragen.

Zur Lösung dieser Aufgabe ist die Erfindung in Verbindung mit dem Patentanspruch 1 dadurch gekennzeichnet, dass das Abschlusselement und das Halteelement fest miteinander verbunden sind zur Bildung eines Befestigungsorgans und dass die Halteelemente über Schraubverbindungsmittel mit einer Wandung des Hohlprofils verbindbar sind.

Der besondere Vorteil der erfindungsgemäßen Vorrichtung besteht darin, dass auf einfache Weise Möbelteile miteinander verbindbar sind, wobei die Befestigungsmittel im Wesentlichen versteckt, das heißt, von außen nicht sichtbar angeordnet sind. Lediglich Köpfe von Verbindungsmitteln, die in eine Bohrung des als Hohlprofil ausgebildeten ersten Möbelteils eingreifen, sind sichtbar. Diese können jedoch in üblicher Weise durch Aufstecken von farblich zum Hohlprofil angepassten Aufsteckkappen versteckt werden. Grundgedanke der Erfindung ist es, ein Befestigungsorgan vorzusehen, das auf der einen Seite an dem zweiten Möbelteil befestigt wird und auf der anderen Seite in das Hohlprofil einsteckbar und mit demselben verbindbar ist. Auf diese Weise ist das Befestigungsorgan von außen nicht erkennbar. Die Verbindung zwischen dem Befestigungsorgan auf der einen Seite und dem ersten und zweiten Möbelteil auf der anderen Seite kann einfach durch eine Schraubverbindung erfolgen.

Nach einer bevorzugten Ausführungsform der Erfindung weist das Befestigungsorgan mindestens zwei Halteelemente auf, die in einem solchen Winkel zu dem Abschlusselement abragen, dass die Halteelemente flächig an einer Innenseite der Wandung des Hohlprofils zur Anlage kommen. Die Größe des Befestigungsorgans bzw. der Abstand von gegenüberliegenden und/oder benachbarten Halteelementen ist auf die Größe des Hohlprofils abgestimmt. Durch die flächige Anlage der Halteelemente an der Innenseite der Wandung des Hohlprofils sind die beiden Möbelteile in der endgültigen Montagestellung eindeutig gehaltert, so dass durch abschließendes Verbinden der Halteelemente mit dem Hohlprofil die Montage beendet ist.

Nach einer Weiterbildung der Erfindung ist an den Halteelementen ein Gewindeansatz mit einem Innengewinde vorgesehen, das sich auf einer der Wandung des Hohlprofils abgewandten Innenseite des Halteelementes erhebt. Das Hohlprofil weist Bohrungen auf, die in der Montagestellung zu dem Gewindeansatz des Befestigungsorgans fluchten und somit das Eindrehen eines Schraubelementes ermöglichen. Zur Gewährleistung dieser fluchtenden Anordnung ist die Bohrung der Wandung des Hohlprofils in einem solchen Abstand zu einer Endkante des Hohlprofils angeordnet, der dem Abstand des Gewindeansatzes zu dem Abschlusselement des Befestigungsorgans entspricht.

Nach einer Weiterbildung der Erfindung sind sowohl das als Grundseite dienende Abschlusselement des Befestigungsorgans als auch die von dem Abschlusselement abragenden Halteelemente eben ausgebildet. Soll das erste Möbelteil senkrecht zu dem zweiten Möbelteil befestigt werden, verlaufen die Halteelemente in einem rechten Winkel zu dem Abschlusselement. Vorzugsweise ist das Befestigungsorgan topfförmig ausgebildet, wobei die Halteelemente lappenartig in einem Winkel zu dem Abschlusselement von demselben abragen. Die Halteelemente sind vorzugsweise nicht miteinander verbunden.

Nach einer Weiterbildung der Erfindung ist das Befestigungsorgan aus einem Metall- oder Kunststoffmaterial hergestellt. Besteht das Befestigungsorgan aus einem Metallmaterial, kann der Gewindeansatz an einer Bohrung der Halteelemente stoffschlüssig und/oder kraftschlüssig, beispielsweise durch Pressen, Kleben, Verschweißen angebracht sein. Ist das Befestigungsorgan aus einem Kunststoffmaterial hergestellt, kann dieses vorzugsweise einstückig durch Spritzgießen hergestellt werden.

Zur Lösung der Aufgabe ist die Erfindung in Verbindung mit dem Oberbegriff des Patentanspruchs 10 dadurch gekennzeichnet, dass in einem ersten Schritt ein Befestigungsorgan mit einem Abschlusselement desselben an dem zweiten Möbelteil durch Schraubverbindung befestigt wird, dass in einem zweiten Schritt das Hohlprofil unter Anlage von dem Abschlusselement abragenden Halteelementen des Befestigungsorgans an einer Innenseite des Hohlprofils auf das Befestigungsorgan aufgesteckt wird und dass in einem abschließenden dritten Schritt die Halteelemente durch Schraubverbindung an dem Hohlprofil befestigt werden.

Der besondere Vorteil des erfindungsgemäßen Befestigungsverfahrens besteht darin, dass zwei Möbelteile bei einfacher Handhabung miteinander verbunden werden können, ohne dass die Befestigungsmittel von außen sichtbar sind. Das Montageverfahren ermöglicht somit eine versteckte Verbindung von zwei Möbelteilen. Handhabungstechnisch einfacher erfolgt die Verbindung lediglich durch ein Verschrauben, wobei zwischen dem Verschrauben des Befestigungsorgans mit dem zweiten Möbelteil und dem Verschrauben des Befestigungsorgans mit dem ersten Möbelteil das erste Möbelteil unter Aufstecken desselben auf das Befestigungsorgan in die Montageposition verbracht wird. Vorzugsweise ist das erste Möbelteil vor dem abschließenden Verbinden mit dem Befestigungsorgan mit Spiel auf demselben aufgesteckt. Das zweite Möbelteil bildet einen Anschlag für das erste Möbelteil, wobei die Anschlaglage mit der Montagelage zusammenfällt.

Ausführungsbeispiele der Erfindung werden nachfolgend anhand der Zeichnungen näher erläutert.

Es zeigen:
- Fig. 1: eine Seitenansicht eines Tisches, bei dem eine Tischplatte über erfindungsgemäße Befestigungsorgane mit senkrechten Tischfüssen verbunden ist,
- Fig. 2: eine Draufsicht auf das Befestigungsorgan, das in dem gestrichelt gezeichneten Tischfuss angeordnet ist,
- Fig. 3: eine Untenansicht des Befestigungsorgans, das in dem gestrichelt gezeichneten Tischfuss angeordnet ist,
- Fig. 4: eine Seitenansicht des Befestigungsorgans, wie es in Fig. 1 in der Montageposition gestrichelt dargestellt,
- Fig. 5: eine teilweise Seitenansicht eines Tisches, bei der die Tischplatte über das Befestigungsorgan mit einem schrägen Tischfuss verbunden ist und
- Fig. 6: einen Querschnitt durch ein an runde Hohlprofile angepasstes Befestigungsorgan.

Eine erfindungsgemäße Vorrichtung zum Befestigen von Möbelteilen wird vorzugsweise für Tische, Stühle, Regale etc. eingesetzt. Die Erfindung ist für jegliche Zerlegmöbel einsetzbar, bei dem es darauf ankommt, dass sie in kleinen Packmaßen zur Selbstmontage bereitgestellt werden.

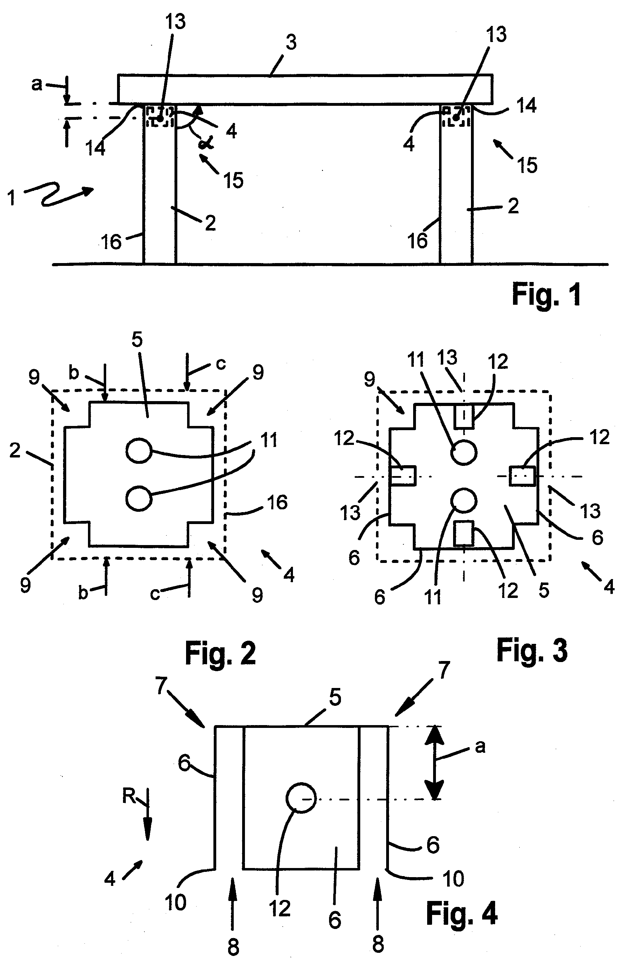

Nach einer ersten Ausführungsform der Erfindung gemäß den Figuren 1 bis 4 wird als Möbelstück ein Tisch 1 aus mehreren ersten Möbelteilen 2, die als Tischfüsse ausgebildet sind, und einem zweiten Möbelteil 3, das als Tischplatte ausgebildet ist, zusammengesetzt.

Zum Befestigen des ersten Möbelteils 2 an dem zweiten Möbelteil 3 ist als Befestigungsmittel ein Befestigungsorgan 4 vorgesehen, das aus einem Abschlusselement 5 und mehreren Halteelementen 6 besteht. Im vorliegenden Ausführungsbeispiel sind vier Halteelemente 6 vorgesehen, die in einem rechten Winkel von dem Abschlusselement 5 abragen. Das Abschlusselement 5 und die Halteelemente 6 sind eben ausgebildet. Das Abschlusselement 5 bildet eine Grundseite des Befestigungsorgans 4. Das Abschlusselement 5 ist viereckig ausgebildet. Von Randseiten 7 des Abschlusselementes 5 ragen jeweils die eben ausgebildeten Halteelemente 6 in einem rechten Winkel ab. Die Halteelemente 6 schließen sich unmittelbar an dem geradlinigen Randseiten 7 des Abschlusselementes 5 an, und zwar in einer gemeinsamen Richtung R. Das Befestigungsorgan 4 ist topfförmig ausgebildet mit Schlitzen 8, die in einem Eckbereich 9 des Befestigungsorgans 4 von dem Abschlusselement 5 bis zu einem freien Rand 10 des Halteelementes 6 verläuft.

Das Befestigungsorgan 4 ist würfelförmig ausgebildet, wobei es auf einer dem Abschlusselement 5 abgewandten Seite eine freie Fläche aufweist.

Das Befestigungsorgan 4 ist einstückig ausgebildet. Im vorliegenden Ausführungsbeispiel besteht das Befestigungsorgan 4 aus einem Metallmaterial, bei dem die Halteelemente 6 durch Umformen in die vorgesehen Lage verbracht worden ist, in der die Halteelemente 6 jeweils senkrecht zum Abschlusselement 5 sowie gegenüberliegende Halteelemente 6 parallel zueinander angeordnet sind.

Das Abschlusselement 5 weist zwei Bohrungen 11 auf, so dass das Befestigungsorgan 4 über nicht dargestellte Verbindungselemente (Schrauben) mit einem flächigen Abschnitt der Tischplatte 3 verbindbar ist (Schraubverbindung). Die Halteelemente 6, die als ebene Haltewangen ausgebildet sind, weisen auf einer inneren Seite einen Gewindeansatz 12 mit einem Innengewinde auf zur lösbaren Verbindung des Befestigungsorgans 4 mittels nicht dargestellter Verbindungselemente mit dem ersten Möbelteil 2 (Schraubverbindung).

Das Befestigungsorgan 4 wird somit über Schraubverbindungsmittel zum einen mit dem ersten Möbelteil 2 und zum anderen mit dem zweiten Möbelteil 3 verbunden.

Zur Montage des ersten Möbelteils 2 an dem zweiten Möbelteil 3 wird in einem ersten Schritt das Befestigungsorgan 4 an dem zweiten Möbelteil 2 befestigt. Hierzu wird das Befestigungsorgan 4 mit dem Abschlusselement 5 an den gewünschten flachen Abschnitt des zweiten Möbelteils 3 angesetzt und über nicht dargestellte und die Bohrungen 11 des Abschlusselementes 5 eingesetzte Schrauben befestigt. Die Bohrungen 11 des Abschlusselementes 5 sind derart angeordnet, dass sie mittels eines Werkzeugs von einer Seite, in der sich die Halteelemente 6 erstrecken, zugänglich ist. Wenn die Tischplatte 3 aus einem Holzwerkstoff besteht, können als Schraubverbindungsmittel beispielsweise Holzschrauben verwendet werden.

In einem zweiten Schritt wird nun das als ein im Querschnitt viereckförmige Hohlprofil ausgebildete erste Möbelteil 2 auf das Befestigungsorgan 4 gesteckt, wobei eine Endkante 14 des Hohlprofils 2 in der Montageposition an dem zweiten Möbelteil 3 anschlägt. Das Hohlprofil 2 weist an Wandungen 16 desselben in einem der Tischplatte 3 zugewandten Endbereich 15, mit dem es auf das Befestigungsorgan 4 aufgesteckt worden ist, jeweils eine Bohrung 13 auf, die in der Montageposition des Hohlprofils 2 an der Tischplatte 3 zu dem Gewindeansatz 12 des Befestigungsorgans 4 fluchten. Zu diesem Zweck sind die Bohrungen 13 in dem gleichen Abstand a zu der Endkante 14 desselben angeordnet, wie der Abstand der Gewindeansätze 12 bzw. der Bohrung des Halteelementes 6 zu dem Abschlusselement 5.

Damit das Hohlprofil 2 mit Spiel auf das Befestigungsorgan 4 aufgesteckt werden kann, ist ein Außenabstand b gegenüberliegender Haltelemente 6 kleiner als ein Innenabstand c gegenüberliegender Wandungen 16 des Hohlprofils 2. Im vorliegenden Ausführungsbeispiel ist das Hohlprofil 2 im Querschnitt quadratisch ausgebildet.

In einem abschließenden Montageschritt kann durch Einschrauben von Schrauben in die zueinander fluchtenden Bohrung 13 des Hohlprofils 2 und des Gewindeansatzes 12 des Befestigungsorgans 4 eine Schraubverbindung zwischen dem Hohlprofil 2 und dem Befestigungsorgan 4 hergestellt werden. Zusätzlich kann ein von außen sichtbarer Kopf der in die Bohrung 13 eingesetzten Schraube durch eine Abdeckkappe abgedeckt werden.

Im vorliegenden Ausführungsbeispiel erfolgt die Befestigung des Hohlprofils 2 an dem Befestigungsorgan 4 an allen vier Seiten der Wandungen 16 desselben.

Nach einer nicht dargestellten alternativen Ausführungsform der Erfindung kann das Befestigungsorgan 4 auch nur zwei gegenüberliegende Halteelemente 6 aufweisen.

Der Gewindeeinsatz 12 kann stoffschlüssig oder kraftschlüssig mit einer Bohrung des Halteelementes 6 verbunden sein.

Nach einer nicht dargestellten alternativen Ausführungsform der Erfindung kann das Befestigungsorgan 4 auch aus einem Kunststoffmaterial bestehen, das vorzugsweise einstückig durch Spritzgießen hergestellt wird.

In der Montageposition liegen die Halteelemente 6 im Wesentlichen flächig auf einer Innenseite der Wandung 16 des Hohlprofils 2 an. Die Halteelemente 6 sind vorzugsweise starr zu dem Abschlusselement 5 ausgebildet.

Alternativ können die Halteelemente 6 auch federnd an dem Abschlusselement 5 befestigt oder angeformt sein. In diesem Fall können die Halteelemente 6 von dem Abschlusselement 5 weg konisch auseinanderlaufen, so dass der freie Rand 10 des Halteelementes 6 beim Aufstecken des Hohlprofils 2 auf das Befestigungsorgan 4 auf die Innenseite der Wandung 16 drückt. In dem Ausführungsbeispiel gemäß Figur 1 bis 4 ragen die Halteelemente 6 unter einem rechten Winkel zu dem Abschlusselement 5 von demselben ab. Dieser Winkel entspricht somit einem Soll-Anlagewinkel β, unter dem das Hohlprofil 2 relativ zu der Tischplatte 3 angeordnet sein soll.

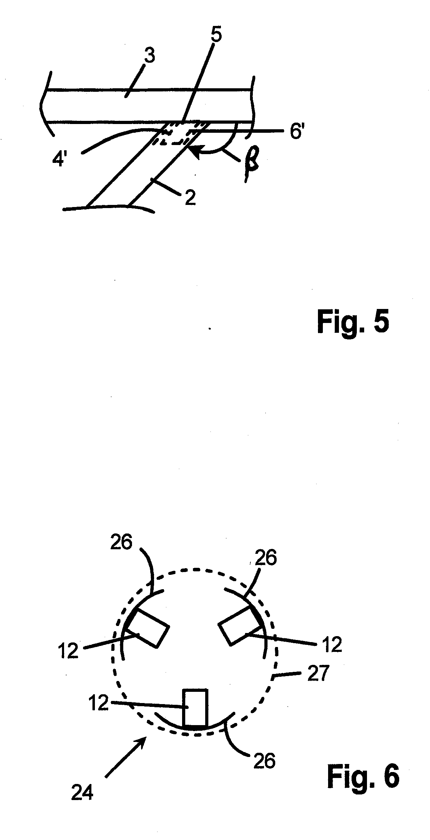

Nach einer alternativen Ausführungsform der Erfindung gemäß Figur 5 kann die Tischplatte 3 auch unter einem Soll-Anlagewinkel β = 135° zu einem Hohlprofil 2' angeordnet sein. Bei dieser Ausführungsform ist ein Befestigungsorgan 4' vorgesehen, das das Abschlusselement 5 sowie eine Anzahl von unter dem Soll-Anlagewinkel β von dem Abschlusselement 5 abragende Halteelemente 6' aufweist. Das Befestigungsorgan 4' weist mindestens zwei gegenüberliegende Halteelemente 4' auf; vorzugsweise vier. Die Halteelemente 6' sind in diesem Fall nicht rechteckförmig bzw. quadratisch, sondern parallelogrammförmig ausgebildet.

Nach einer weiteren alternativen Ausführungsform der Erfindung gemäß Figur 6 ist ein Befestigungsorgan 24 vorgesehen, das über ein kreisrundes Abschlusselement und in Umfangsrichtung U bogenförmig verlaufende Halteelemente 26 aufweist. Der Radius der Halteelemente 26 ist kleiner als ein Radius des als im Querschnitt kreisförmig ausgebildeten Hohlprofils 27, das als rohrförmiges erste Möbelteil dient.

Nach der Erfindung sind die mindestens zwei Halteelemente 6, 6', 26 so angeordnet, dass sie von dem Hohlprofil 2, 2', 27 überstülpt bzw. mit Spiel in den Endbereich des Hohlprofils 2, 2', 27 eingesteckt werden können.

## Patentansprüche

1. Vorrichtung zum Befestigen von Möbelteilen, wobei ein erstes Möbelteil (2, 2', 27) als ein langgestrecktes Hohlprofil und ein zweites Möbelteil (3) einen flächigen Abschnitt aufweist, an dem ein Endbereich (15) des langgestreckten Hohlprofils (2, 2', 27) über Befestigungsmittel lösbar befestigbar ist, dass das Befestigungsmittel ein in dem Hohlprofil (2, 2', 27) erstreckendes Abschlusselement (5)
- ein Verbindungselement zum Verbinden des Abschlusselementes (5) mit dem flächigen Abschnitt des zweiten Möbelteils (3),
- eine Anzahl von Halteelementen (6, 6', 26) zum Halten des Abschlusselementes (5) an dem Hohlprofil (2, 2', 27) aufweist,
**dadurch gekennzeichnet, dass** das Abschlusselement (5) und das Halteelement (6, 6', 26) fest miteinander verbunden sind zur Bildung eines Befestigungsorgans (4, 4', 24) und dass die Halteelemente (6, 6', 26) über Schraubverbindungsmittel mit einer Wandung (16) des Hohlprofils (2, 2', 27) verbindbar sind.

2. Vorrichtung nach Anspruch 1, **dadurch gekennzeichnet, dass** mindestens zwei Halteelemente (6, 6', 26) in einem solchen Winkel zu dem Abschlusselement (5) von demselben abragen, dass die Halteelemente (6, 6', 26) flächig auf einer Innenseite der Wandung (16) des Hohlprofils (2, 2', 27) zur Anlage kommen.

3. Vorrichtung nach Anspruch 1 oder 2, **dadurch gekennzeichnet, dass** die Halteelemente (6, 6', 26) auf einer der Wandung (16) des Hohlprofils (2, 2', 27)) abgewandten Innenseite einen Gewindeansatz (12) mit einem Innengewinde aufweisen, derart, dass das Halteelement (6, 6', 26) mittels eines in einer Bohrung der Wandung (16) des Hohlprofils (2, 2', 27)) eingreifenden Schraubelementes als Verbindungselement mit dem Hohlprofil (2, 2') verbindbar ist.

4. Vorrichtung nach einem der Ansprüche 1 bis 3, **dadurch gekennzeichnet, dass** die Bohrung der Wandung (16) des Hohlprofils (2, 2', 27) zu einer Endkante (14) desselben einerseits und der Gewindeansatz (12) des Halteelementes (6, 6') zu dem Abschlusselement (5) andererseits in einem gleichen Abstand (a) angeordnet sind, so dass die Bohrung (13) des Hohlprofils (2, 2', 27)) und die der Gewindeansatz (12) des Halteelementes (6, 6', 26) in der Montageposition zueinander fluchten.

5. Vorrichtung nach einem der Ansprüche 1 bis 4, **dadurch gekennzeichnet, dass** das Abschlusselement (5) eben ausgebildet ist und mindestens eine Bohrung (11) aufweist, so dass mittels des Verbindungselementes das Abschlusselement (5) fest mit dem zweiten Möbelteil (3) verbindbar ist.

6. Vorrichtung nach einem der Ansprüche 1 bis 5, **dadurch gekennzeichnet, dass** die Halteelemente (6, 6', 26) in einem Winkel zu dem Abschlusselement (5) von demselben abragen, der mit dem Soll-Anlagewinkel (β) übereinstimmt, unter dem das Hohlprofil (2, 2', 27) relativ zu dem zweiten Möbelteil (3) angeordnet ist.

7. Vorrichtung nach einem der Ansprüche 1 bis 6, **dadurch gekennzeichnet, dass** ein Außenabstand (b) gegenüberliegender Halteelemente (6, 6', 26) des Befestigungsorgans (4, 4') kleiner ist als ein Innenabstand (c) von gegenüberliegenden Wandungen (16) des Hohlprofils (2, 2', 27).

8. Vorrichtung nach einem der Ansprüche 1 bis 7, **dadurch gekennzeichnet, dass** das Hohlprofil (2, 2', 27) im Querschnitt mehreckig und/oder quadratisch oder im Querschnitt kreis- oder ellipsenförmig ausgebildet ist einerseits und dass die Halteelemente (6, 6', 26) konturfolgend zu den Wandungen (16) des Hohlprofils (2, 2', 27) verlaufen.

9. Vorrichtung nach einem der Ansprüche 1 bis 8, **dadurch gekennzeichnet, dass** das Abschlusselement (5) und die mindestens zwei von demselben abragenden Halteelemente (6, 6', 26) aus einem Metall- oder Kunststoffmaterial bestehen, wobei der Gewindeansatz (12) an einer Bohrung des Halteelementes (6, 6', 26) stoffschlüssig und/oder kraftschlüssig befestigt ist oder durch Spritzgießen einstückig mit dem Halteelement (6, 6', 26) verbunden ist.

10. Verfahren zum Befestigen eines ersten Möbelteils (2, 2', 27) an einem zweiten Möbelteil (3), wobei das erste Möbelteil (2, 2', 27) als ein Hohlprofil ausgebildet ist, **dadurch gekennzeichnet, dass** in einem ersten Schritt ein Befestigungsorgan (4, 4', 24) mit einem Abschlusselement (5) desselben an dem zweiten Möbelteil (3) durch Schraubverbindung befestigt wird, dass in einem zweiten Schritt das Hohlprofil (2, 2', 27) unter Anlage von dem Abschlusselement (5) abragenden Halteelementen (6, 6', 26) des Befestigungsorgans (4, 4', 24) an einer Innenseite des Hohlprofils (2, 2', 27) auf das Befestigungsorgan (4, 4', 24) aufgesteckt wird und dass in einem abschließenden dritten Schritt die Halteelemente (6, 6', 26) durch Schraubverbindung an dem Hohlprofil befestigt werden.
